# EUROPÄISCHE PATENTANMELDUNG

(11) **EP 1 118 496 A1**
(43) Veröffentlichungstag der Anmeldung: **25.07.2001**
(21) Anmeldenummer: 00127767.2
(22) Anmeldetag: 19.12.2000
(51) Int. Cl.: B60L 11/12

(54) **Antriebssystem, insbesondere Hybridantrieb**

(30) Priorität: 19.01.2000 DE 10002206
(71) Anmelder: Voith Turbo GmbH & Co. KG, 89522 Heidenheim (DE)
(72) Erfinder: Wüst, Bernhard, Dr., 89518 Heidenheim (DE); Koll, Stefan, 89522 Heidenheim (DE)
(74) Vertreter: Dr. Weitzel & Partner

(57) **Zusammenfassung**

Die Erfindung betrifft ein Antriebssystem für Fahrzeuge, insbesondere Hybridantrieb
mit einer ersten Antriebsmaschine in Form einer Verbrennungskraftmaschine und einer zweiten elektrischen Antriebsmaschine zum Antrieb einer Eingangswelle einer Getriebebaueinheit;
mit Mitteln zur Realisierung eines wahlweisen Antriebes über die Verbrennungskraftmaschine oder die elektrische Antriebsmaschine.

Die Erfindung ist gekennzeichnet durch die folgenden Merkmale:
die elektrische Antriebsmaschine ist als Transversalflußmaschine ausgeführt.

## Beschreibung

Die Erfindung betrifft ein Antriebssystem für Fahrzeuge, insbesondere einen Hybridantrieb, im einzelnen mit den Merkmalen aus dem Oberbegriff des Anspruchs 1.

Hybridantriebe, welche eine Kombination aus verschiedenen Antriebsarten oder Energieträgern darstellen, sind für den Einsatz im Kraftfahrzeugbereich in einer Vielzahl von Ausführungen bekannt. Im Kraftfahrzeugbereich finden dabei als mögliche Antriebsaggregate Verbrennungskraftmaschinen und Elektromotoren Verwendung. Die Fahrzeuge können dabei entweder mittels der Verbrennungskraftmaschine oder aber mittels des Elektroantriebes fortbewegt werden. Eine kombinierte Nutzung beider Antriebsaggregate ist ebenfalls denkbar. Für die Zwischenspeicherung elektrischer Energie werden entsprechende Speichermedien, wie beispielsweise Batterien oder Supercaps vorgesehen. Wesentliche Vorteile derartiger Antriebssysteme bestehen in einer verbesserten Kraftstoffausnutzung, der Möglichkeit, bestimmte vordefinierte Wegstrecken emissionsfrei zurückzulegen, der Möglichkeit eines verschleißfreien elektrischen Bremsens sowie der Energierückgewinnung beim Bremsen und die Verwendung einer kleiner dimensionierten Verbrennungskraftmaschine.

Der Aufbau bisher bekannter Hybridsysteme ist jedoch durch einen erheblichen Bauraumbedarf charakterisiert. Dieser ist im einzelnen durch die räumlich weit entfernte Anordnung der unterschiedlichen Antriebssysteme bedingt, welche wiederum entsprechende Kopplungsmöglichkeiten mit dem Hauptantriebsstrang erfordern.

Der Erfindung lag daher die Aufgabe zugrunde, ein Antriebssystem, insbesondere einen Hybridantrieb der eingangs genannten Art derart weiterzuentwickeln, daß die genannten Nachteile vermieden werden. Im einzelnen ist auf eine besonders kompakte Ausführung des Antriebssystems abzustellen, welches einen minimalen Bauraumbedarf erfordert. Des weiteren soll sich diese durch eine minimale Bauteilanzahl auszeichnen.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Ein Antriebssystem, insbesondere ein Hybridantrieb, umfaßt wenigstens zwei Antriebsaggregate, eine erste Antriebsmaschine in Form einer Verbrennungskraftmaschine und eine zweite Antriebsmaschine in Form eines Elektromotors, welcher vorzugsweise sowohl im Motorbetrieb als auch Generatorbetrieb betreibbar ist. Der Elektromotor ist über einen Umrichter mit einer geeigneten Energiespeichereinheit koppelbar. Des weiteren ist eine Getriebebaueinheit vorgesehen, welche eine Drehzahl/Drehmomentwandlungseinrichtung umfaßt, und deren Eingangswelle mit den einzelnen Antriebsaggregaten verbindbar ist. Dabei sind Mittel zur wahlweisen Kopplung der einzelnen Antriebsaggregate mit der Eingangswelle der Getriebebaueinheit vorgesehen. Erfindungsgemäß ist die elektrische Antriebsmaschine als Transversalflußmaschine ausgeführt und räumlich zwischen der Verbrennungskraftmaschine und der Getriebebaueinheit angeordnet, wobei Verbrennungskraftmaschine, Transversalflußmaschine und Eingangswelle der Getriebebaueinheit koaxial zueinander angeordnet sind.

Die erfindungsgemäße Lösung bietet den Vorteil, daß auf einfache Art und Weise aus einem konventionellen Antriebsstrang ein Hybridantrieb erstellt werden kann, ohne daß zusätzlicher Bauraum erforderlich ist, lediglich in radialer Richtung muß darauf geachtet werden, daß die Transversalflußmaschine in den zur Verfügung stehenden Bauraum hineinpaßt. Die Verwendung einer Transversalflußmaschine bietet den Vorteil, daß eine Hybridanordnung bereits ohne zusätzliche Getriebestufen möglich ist, da die Transversalflußmaschine sich direkt auf dem Drehzahlniveau der Verbrennungskraftmaschine betreiben läßt. Des weiteren weist die Transversalflußmaschine über den gesamten Drehzahlbereich einen hohen Wirkungsgrad auf, was eine optimale Wandlung von elektrischer in mechanische Energie gewährleistet. Als Transversalflußmaschine besitzt die elektrische Antriebsmaschine des weiteren eine sehr gute Momenten- und Leistungsdichte. Der zusätzlich aufzuwendende Bauraum kann unter Verwendung dieses Maschinentyps minimal gehalten werden, teilweise bietet dieser sogar die Möglichkeit, eine kleiner dimensionierte Verbrennungsmaschine zu verwenden. Dies gilt auch bezüglich des Gewichtes.

Die Mittel zur wahlweisen Kopplung der Verbrennungskraftmaschine oder der Transversalflußmaschine mit der Eingangswelle der Getriebebaueinheit umfassen im einfachsten Fall wenigstens eine Kupplungseinrichtung, welche zwischen Verbrennungskraftmaschine und Transversalflußmaschine angeordnet ist. Diese umfaßt wenigstens zwei Kupplungselemente, wobei eines der Kupplungselemente drehfest mit der Abtriebswelle der Verbrennungskraftmaschine und das andere zweite Kupplungselement drehfest mit dem Rotor der Transversalflußmaschine verbunden ist. Vorzugsweise wird unter einem weiteren Aspekt der Erfindung das erste Kupplungselement von einem Schwungrad, welches mit der Abtriebswelle der Verbrennungskraftmaschine drehfest verbunden ist, gebildet. Dadurch wird zusätzlicher Bauraum eingespart und ein bereits ohnehin vorhandenes Aggregat zur Leistungsübertragung genutzt.

Für die Kopplung des Rotors der Transversalflußmaschine mit der Eingangswelle der Getriebebaueinheit bestehen im wesentlichen zwei Möglichkeiten:
a) während des Betriebes nicht lösbar und drehfest und
b) wahlweise drehfest.

Im erstgenannten Fall ist dabei der Rotor drehfest mit der Eingangswelle der Getriebebaueinheit verbunden. Dies bedeutet jedoch, daß beim Antrieb über die Verbrennungskraftmaschine der Rotor der Transversalflußmaschine immer mitgeschleppt wird und damit zusätzliche Leistung von der Verbrennungskraftmaschine für das Mitschleppen des Rotors erforderlich ist. Im Leerlauf ist die Schleppleistung jedoch relativ gering. Bei entsprechender Ansteuerung der Transversalflußmaschine durch die Umrichter kann dem Antriebsstrang gezielt Leistung entzogen und in einer Energiespeichereinheit, beispielsweise Batterie, gespeichert werden. Während des Betriebes der Transversalflußmaschine als Motor besteht dann die Möglichkeit diese Leistung in den Antriebsstrang zurückzuspeisen.
Im zweiten Fall ist der Rotor der Transversalflußmaschine wenigstens mittelbar drehfest mit der Eingangswelle der Getriebebaueinheit verbindbar, dies bedeutet, daß keine ständige drehfeste Verbindung vorliegen muß, sondern diese über entsprechende Mittel wahlweise realisiert wird. Im einfachsten Fall wird dabei eine Kupplungseinrichtung vorgesehen, welche zwischen dem Rotor der Transversalflußmaschine und der Eingangswelle der Getriebebaueinheit angeordnet ist. Der Rotor der Transversalflußmaschine ist zu diesem Zweck mit einer Hohlwelle drehfest verbindbar, wobei die Hohlwelle die Eingangswelle der Getriebebaueinheit in Umfangsrichtung und in axialer Richtung einen Teil der axialen Erstreckung der Eingangswelle der Getriebebaueinheit umschließt. Die Kupplungseinrichtung ist dann zwischen der Hohlwelle und der Eingangswelle der Getriebebaueinheit angeordnet. Die Rotorbauform der Transversalflußmaschine begünstigt dabei die Ausbildung einer Hohlwelle. Vorzugsweise sind der Rotor und die Hohlwelle als integrales Bauelement ausgeführt, das heißt einstückig. Denkbar ist jedoch auch die Ausführung als separate Bauelemente, wobei Mittel zur drehfesten Verbindung zwischen der Hohlwelle und dem Rotor der Transversalflußmaschine vorzusehen sind. Mit der zweiten Konfiguration ist es möglich, die Kraftübertragung zwischen Verbrennungskraftmaschine und Getriebe und der Abtrennung der Transversalflußmaschine vom Antriebsstrang zu realisieren, so daß im Fahrbetrieb von der Verbrennungskraftmaschine keine Schleppverluste durch das Mitdrehen des Rotors der leer laufenden elektrischen Maschine auftreten.

Das Antriebs-, insbesondere Hybridsystem ist im wesentlichen mit drei Betriebsweisen betreibbar, eine erste Betriebsweise, welche durch den Antrieb über die Verbrennungskraftmaschine charakterisiert ist, eine zweite Betriebsweise, welche durch den alleinigen Antrieb über die Transversalflußmaschine charakterisiert ist und eine dritte Betriebsweise, in welcher die Antriebsleistung von beiden Antriebsaggregaten gemeinsam aufgebracht und durch Summierung gebildet wird. Zur Inbetriebnahme der Trasversalflußmaschine ist es neben der Betätigung der entsprechenden Kupplungseinrichtungen erforderlich, die Ankerwicklungen der Transversalflußmaschine entsprechend zu bestromen. Die elektrische Leistung wird dabei von extern außerhalb des Fahrzeuges, beispielsweise bei Oberleitungsbussen oder intern im Fahrzeug aus einer Energiespeichereinheit, beispielsweise in Form von Batterien, bereitgestellt. Diesbezüglich bedarf es einer Steuervorrichtung, welche gleichzeitig die entsprechenden Mittel zur wahlweisen Kopplung der Eingangswelle der Getriebebaueinheit mit der Verbrennungskraftmaschine oder der Transversalflußmaschine betätigt und den die Transversalflußmaschine speisenden Umrichter ansteuert.

Bezüglich der konkreten Ausgestaltung der einzelnen Aggregate - Verbrennungskraftmaschine, Transversalflußmaschine und Getriebebaueinheit - bestehen keine zwingenden Erfordernisse. Diese können entsprechend des Einsatzfalles ausgewählt und ausgelegt werden. Unter einem weiteren Aspekt der Erfindung besteht zusätzlich die Möglichkeit, zwischen der zwischen Verbrennungskraftmaschine und Transversalflußmaschine angeordneten Kupplungseinrichtung und Transversalflußmaschine eine Einrichtung zur Schwingungsdämpfung vorzusehen. Diese kann vorzugsweise bereits in der Kupplungseinrichtung integriert werden.

Die Getriebebaueinheit selbst kann als Schaltgetriebe, automatisiertes Schaltgetriebe oder Automatgetriebe ausgeführt sein. Die Leistungsübertragung kann dabei über Gangstufen oder stufenlos erfolgen.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung anhand eines Ausschnittes aus einem Antriebssystem eine erste Möglichkeit der koaxialen Anordnung einer Transversalflußmaschine zwischen der Verbrennungskraftmaschine und der Getriebebaueinheit;
- Figur 2: verdeutlicht anhand eines Ausschnittes aus einem Antriebssystem eine zweite Ausführungsmöglichkeit der koaxialen Anordnung einer Transversalflußmaschine zwischen einer Verbrennungskraftmaschine und einer Getriebebaueinheit.

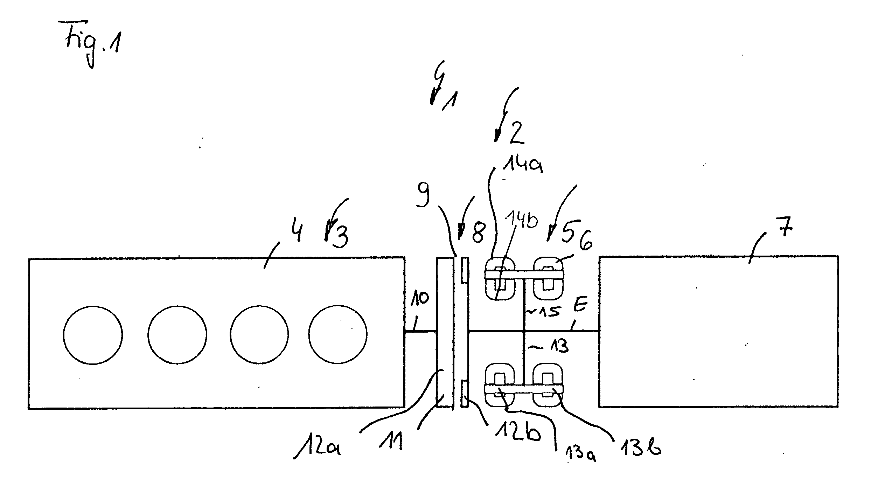

Die Figur 1 verdeutlicht in schematisch vereinfachter Darstellung einen Ausschnitt aus einem Antriebssystem 1, insbesondere einen Hybridantrieb 2, für den Einsatz in Fahrzeugen zum Antrieb wenigstens eines, hier im einzelnen nicht dargestellten Rades. Das Antriebssystem 1 umfaßt eine erste Antriebsmaschine 3, welche in Form einer Verbrennungskraftmaschine 4 ausgeführt ist. Entsprechend des Hybrid-Grundprinzips ist eine weitere zweite, elektrische Antriebsmaschine 5 vorgesehen, welche erfindungsgemäß als Transversalflußmaschine 6 ausgeführt ist. Beide - Verbrennungskraftmaschine 4 oder Transversalflußmaschine 6 - dienen dabei als Antriebsquelle für die Leistungsübertragung mittels einer Drehzahl/Drehmomentwandlungsbaueinheit 7 auf die anzutreibenden Räder. Es sind Mittel 8 zur wahlweisen Realisierung einer Leistungsübertragung von der Antriebsquelle, insbesondere der ersten Antriebsmaschine 3 oder der zweiten Antriebsmaschine 5 zur Eingangswelle E der Drehzahl/Drehmomentwandlungsbaueinheit 7, insbesondere der Getriebebaueinheit vorgesehen. Erfindungsgemäß erfolgt die Anordnung der zweiten elektrischen Antriebsmaschine 5, insbesondere der Transversalflußmaschine 6 räumlich zwischen der Verbrennungskraftmaschine 4 und der Getriebebaueinheit 7. Die Verbrennungskraftmaschine 4, die Eingangswelle E der Getriebebaueinheit 7 und die Transversalflußmaschine 6 sind des weiteren koaxial angeordnet. Die Mittel 8 zur wahlweisen Realisierung der Leistungsübertragung von der Verbrennungskraftmaschine 4 zur Getriebebaueinheit 7 oder der Transversalflußmaschine 6 zur Getriebebaueinheit 7 umfassen wenigstens eine Kupplungseinrichtung 9. Die Kupplungseinrichtung 9 ist dabei räumlich zwischen der Verbrennungskraftmaschine 4 und der Transversalflußmaschine 6 angeordnet. Vorzugsweise wird diese hinter einem mit der Verbrennungskraftmaschine 4, insbesondere der Abtriebswelle 10 der Verbrennungskraftmaschine 4 koppelbaren Schwungrad 11 angeordnet. Eine besonders vorteilhafte Ausgestaltung besteht entsprechend der Figur 1 darin, das eines der miteinander in Wirkverbindung bringbaren Kupplungselemente 12a oder 12b der Kupplungseinrichtung 9 vom Schwungrad 11 gebildet wird. Die Kupplungseinrichtung 9 dient dabei der Realisierung der Kopplung zwischen der Abtriebswelle 10 der Verbrennungskraftmaschine 4 und der Getriebeeingangswelle E oder im nicht betätigten Zustand der Kopplung der Transversalflußmaschine 6 mit der Getriebebaueinheit 7, wobei durch entsprechende Bestromung der Ankerwicklungen der Transversalflußmaschine die gewünschte Leistung erzeugt wird und der Antrieb allein über die Transversalflußmaschine 6 erfolgt. Dazu ist im dargestellten Fall vereinfacht der Rotor 13 der Transversalflußmaschine 6 mit der Getriebeeingangswelle E wenigstens mittelbar drehfest verbunden. Vorzugsweise ist dieser, wie in der Figur 1 dargestellt, drehfest auf der Getriebeeingangswelle E angeordnet. Des weiteren ist das in Leistungsflußrichtung betrachtet zweite Kupplungselement 12b der Kupplungseinrichtung 9 drehfest mit dem Rotor 13 der Transversalflußmaschine 6 verbunden.

Das erste Kupplungselement 12a der Kupplungseinrichtung 9 ist drehfest mit der Abtriebswelle 10 der Verbrennungskraftmaschine 4 gekoppelt. Im geöffneten Zustand der Kupplungseinrichtung 9 ist lediglich ein Antrieb über die zweite elektrische Antriebsmaschine 5 in Form der Transversalflußmaschine 6 möglich. Die Ankerwicklungen der Transversalflußmaschine werden zu diesem Zweck mit einem bestimmten definierten Strom gespeist. Die andere Betriebsweise des Antriebssystems 1 ist dadurch charakterisiert, daß die Kupplungseinrichtung 9 geschlossen ist, das heißt die einzelnen Kupplungselemente 12a und 12b miteinander in Wirkverbindung gebracht werden, so daß die Leistungsübertragung von der Verbrennungskraftmaschine 4 zur Getriebebaueinheit 7 erfolgt. Der drehfest mit der Getriebeeingangswelle E gekoppelte Rotor 13 der Transversalflußmaschine 6 wird in dieser Betriebsweise mitgeschleppt. Die dabei anfallende Schleppleistung P_{Schlepp} ist als Verlustleitung zu verbuchen.

Bezüglich der konkreten Ausführung der Verbrennungskraftmaschine 4, der Transversalflußmaschine 6 und/oder der Getriebebaueinheit 7 bestehen keine besonderen Anforderungen. Diese können entsprechend des gewählten Einsatzfalles hinsichtlich ihrer Ausführung und Auslegung ausgewählt werden. Bei der Getriebebaueinheit 7 kann es sich dabei hinsichtlich der Leistungsübertragung um ein rein mechanisches Getriebe, ein Verbundgetriebe aus einem hydrodynamischen und mechanischem Getriebeteil oder einem hydrostatischen und mechanischem Getriebeteil handeln. Des weiteren ist es unerheblich, ob die Getriebebaueinheit 7 als Schaltgetriebe, automatisiertes Schaltgetriebe oder Automatgetriebe ausgeführt ist. Des weiteren kann die Leistungsübertragung in Gangstufen oder aber stufenlos gesteuert werden.

Die Transversalflußmaschine 6, das heißt eine Wechselstrommaschine, welche auf dem Grundprinzip der Wanderfeld-Erzeugung basiert, kann vielgestaltig ausgeführt sein. Vorzugsweise weist diese jedoch einen im wesentlichen symmetrischen Aufbau auf. Die Transversalflußmaschine 6 kann dabei entsprechend den Ausführungen, wie in den nachfolgend genannten Druckschriften beschrieben, gestalt sein:
1. DE 35 36 538 A1
2. DE 37 05 089 C1
3. DE 39 04 516 C1
4. DE 41 25 779 C1

Der Offenbarungsgehalt bezüglich der Ausgestaltung und Arbeitsweise von Transversalflußmaschinen wird hiermit voll umfänglich in den Offenbarungsgehalt der vorliegenden Anmeldung mit einbezogen. Die in diesen Druckschriften beschriebenen Transversalflußmaschinen 6 umfassen wenigstens einen Stator, hier mit 14 bezeichnet, welcher wenigstens eine Ankerwicklung trägt. Der Rotor 13 besteht dabei aus wenigstens zwei nebeneinander angeordneten, durch eine Zwischenlage aus magnetisch und elektrisch nicht leitendem Material getrennten Ringelementen, die in Umfangsrichtung eine Vielzahl von wechselweise angeordneten polarisierten Magneten und Weicheisenelementen aufweisen. Eine derartige Anordnung zweier Ringelemente bildet eine Polstruktur. Bei einer symmetrisch gestalteten Transversalflußmaschine 6 ist dabei jeweils eine Polstruktur zu beiden Seiten an einer zentralen Trägerscheibe angeordnet. Diese sind hier mit 13a und 13b bezeichnet, wobei die Trägerscheibe mit 15 gekennzeichnet ist. Vorzugsweise ist der Stator 14 derart ausgebildet, daß dieser einen Außen- und einen Innenstator umfaßt, das heißt, daß der Rotor 13 in radialer Richtung betrachtet zwischen dem Außenstator und dem Innenstator rotiert. Der Außenstator ist hier mit 14a und der Innenstator mit 14b bezeichnet. Denkbar ist jedoch auch der Einsatz von Ausführungen mit nur einem Innenstator oder einem Außenstator. Die Bezeichnung magnetisch nicht leitbares Material bedeutet im technischen Sinne eine Leitfähigkeit wie im Vakuum oder Luft mit einer Permeabilität von 1.

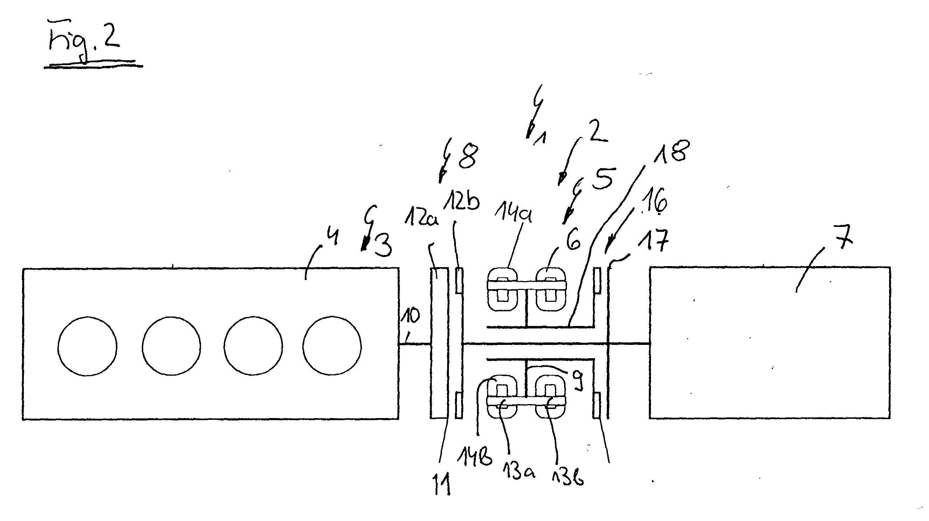

Die Figur 2 verdeutlicht eine weitere Ausführung einer erfindungsgemäßen koaxialen Anordnung einer Transversalflußmaschine 6 zwischen einer Verbrennungskraftmaschine 4 und einer Getriebebaueinheit 7 in einem Antriebssystem 1, insbesondere in einem Hybridantrieb 2. Der Grundaufbau entspricht im wesentlichen dem in der Figur 1 beschriebenen, weshalb für gleiche Elemente die gleichen Bezugszeichen verwendet werden. Gegenüber der Figur 1 unterscheidet sich die Anordnung durch das Vorsehen von Mitteln 16 zur Entkopplung des Rotors 13 der Transversalflußmaschine 6 während der Betriebsweise der Leistungsübertragung von der Verbrennungskraftmaschine 4 auf die Räder, insbesondere die Getriebebaueinheit 7. Die Mittel 16 umfassen dabei eine Kupplungseinrichtung 17, welche zwischen dem Rotor 13 der Transversalflußmaschine 6 und der Getriebeeingangswelle E angeordnet ist. Der Rotor 13 weist zu diesem Zweck eine Hohlwelle 18 auf, welche die Getriebeeingangswelle E beziehungsweise die mit der Getriebeeingangswelle E drehfest verbundenen Elemente, vorzugsweise Wellenstrang, in Umfangsrichtung über eine bestimmte axiale Erstreckung der Getriebeeingangswelle E beziehungsweise des mit diesem drehfest verbundenen Elementes umschließt. Die Kupplungseinrichtung 17 ist dabei zwischen der Hohlwelle 18 und der Getriebeeingangswelle angeordnet. Bei dieser Ausführung sind entsprechend der Betätigung der Kupplungseinrichtung 9 und der zweiten Kupplungseinrichtung 17 ebenfalls zwei unterschiedliche Betriebsweisen realisierbar. Die erste Betriebsweise ist durch die Leistungsbereitstellung durch die Verbrennungskraftmaschine 4 charakterisiert, wobei die Leistungsübertragung von der Verbrennungskraftmaschine direkt zur Getriebebaueinheit 7 erfolgt. Dabei ist die Kupplungseinrichtung 9 geschlossen, während die Kupplungseinrichtung 17 geöffnet ist. Der Rotor der Transversalflußmaschine 6 ist in diesem Funktionszustand von der Getriebeeingangswelle E entkoppelt. Damit sind keinerlei Verlustleistungsanteile für das Mitschleppen des Rotors zu verzeichnen. In der zweiten Betriebsweise ist die erste Kupplungseinrichtung 9 geöffnet und die zweite Kupplungseinrichtung 17 geschlossen, wobei die Transversalflußmaschine 6, insbesondere deren Ankerwicklungen mit einem entsprechenden Strom gespeist wird. Der Antrieb erfolgt nunmehr allein über die Transversalflußmaschine 6.

Zusätzlich besteht die Möglichkeit bei beiden Ausführungen die der Getriebeeingangswelle zugeführte Gesamtleistung aus den von der Verbrennungskraftmaschine 4 und der Transversalflußmaschine 6 jeweils bereit gestellten Leistung zu bilden. Die jeweils von Verbrennungskraftmaschine und Transversalflußmaschine bereitstellbaren Leistungen werden dabei in Bezug auf die Gesamtleistung als Teilleistung bezeichnet. Weiterhin ist es in beiden Ausführungen möglich, dem Antriebsstrang über die Transversalflußmaschine Leistung zu entziehen und so ein Bremsmoment zu erzeugen, mit welchem das Fahrzeug gebremst werden kann. In der ersten Ausführung ist dazu die Transversalflußmaschine mittels der Umrichter generatorisch zu betreiben. In der zweiten Ausführung ist zusätzlich das Schließen der zweiten Kupplungsvorrichtung 17 erforderlich. In diesem Fall erfolgt bei Ausführung 1 bei geschlossener erster Kupplungseinrichtung 9 zusätzlich die Bestromung der Ankerwicklungen. Die als Leistungsanteile fungierenden Teilleistungen werden addiert. Dies findet beim Auftreten von Leistungsspitzen Anwendung.

In der zweiten Betriebsweise, das heißt dem Antrieb über die Transversalflußmaschine, welche sowohl im Motor- als auch im Generatorbetrieb betreibbar ist, kann diese durch entsprechende Betriebsweise - Motor- oder Generatorbetrieb - auch als Synchronisierhilfe bei der Durchführung von Rückschaltungen oder Hochsehaltungen verwendet werden. In beiden Fällen ist des weiteren im Bremsbetrieb die Rückspeisung der über die Getriebebaueinheit 7 gewonnenen Leistung in einen Energiespeicher möglich.

### Bezugszeichenliste

- 1: Antriebssystem
- 2: Hybridantrieb
- 3: erste Antriebsmaschine
- 4: Verbrennungskraftmaschine
- 5: zweite elektrische Antriebsmaschine
- 6: Transversalflußmaschine
- 7: Drehzahl-/Drehmomentwandlungsbaueinheit, insbesondere Getriebebaueinheit
- 8: Mittel zur wahlweisen Realisierung einer Leistungsübertragung von der ersten Antriebsquelle oder der zweiten Antriebsquelle auf die Getriebebaueinheit
- 9: Kupplungseinrichtung
- 10: Abtriebswelle der Verbrennungskraftmaschine
- 11: Schwungrad
- 12a, 12b: Kupplungselemente
- 13: Rotor
- 13a, 13b: Polstrukturen
- 14: Stator
- 14a: Außenstator
- 14b: Innenstator
- 15: Trägerscheibe
- 16: Mittel zur Entkopplung
- 17: Kupplungseinrichtung
- 18: Hohlwelle
- E: Eingang

## Patentansprüche

1. Antriebssystem (1) für Fahrzeuge, insbesondere Hybridantrieb (2)
1.1 mit einer ersten als Antriebsmaschine (3), Verbrennungskraftmaschine (4) ausgeführten und einer zweiten als elektrisch angeführte Maschine Antriebsmaschine (5) zum Antrieb einer Eingangswelle (E) einer Getriebebaueinheit (7);
1.2 mit Mitteln (8) zur Realisierung eines wahlweisen Antriebes über die Verbrennungskraftmaschine (4) oder die elektrische Antriebsmaschine (5);
gekennzeichnet durch die folgenden Merkmale:
1.3 die elektrische Antriebsmaschine (5) ist als Transversalflußmaschine (6) ausgeführt und räumlich zwischen Verbrennungskraftmaschine (4) und Getriebebaueinheit (7) angeordnet;
1.4 die Transversalflußmaschine (6), die Verbrennungskraftmaschine (4) und die Eingangswelle (E) der Getriebebaueinheit (7) sind koaxial zueinander angeordnet.

2. Antriebssystem (1) nach Anspruch 1, gekennzeichnet durch die folgenden Merkmale:
2.1 die Transversalflußmaschine (6) umfaßt einen Rotor (13) und einen Stator (14);
2.2 der Rotor (13) der Transversalflußmaschine (6) ist wenigstens mittelbar drehfest mit der Eingangswelle (E) der Getriebebaueinheit (7) verbindbar;
2.3 die Mittel (8) zur Realisierung einer wahlweisen Kopplung der Verbrennungskraftmaschine (4) oder der Transversalflußmaschine (6) mit der Eingangswelle (E) der Getriebebaueinheit (7) umfassen eine räumlich zwischen der Verbrennungskraftmaschine (4) und der Transversalflußmaschine (6) angeordnete Kupplungseinrichtung (9).

3. Antriebssystem (1) nach Anspruch 2, gekennzeichnet durch die folgenden Merkmale:
3.1 es ist ein Schwungrad (11) vorgesehen, welches mit der Abtriebswelle der Verbrennungskraftmaschine (4) drehfest verbunden ist;
3.2 die Kupplungseinrichtung (9) umfaßt wenigstens zwei Kupplungselemente (12a, 12b), die wenigstens mittelbar miteinander in Wirkverbindung bringbar sind;
3.3 ein erstes Kupplungselement (12a) wird vom Schwungrad (11) gebildet;
3.4 das zweite Kupplungselement (12b) ist drehfest mit dem Rotor (13) der Transversalflußmaschine verbunden.

4. Antriebssystem (1) nach einem der Ansprüche 2 oder 3, dadurch gekennzeichnet, daß der Rotor (13) drehfest mit der Eingangswelle (E) der Getriebebaueinheit (7) verbunden ist.

5. Antriebssystem (1), dadurch gekennzeichnet, daß Mittel (16) zur Entkopplung des Rotors (13) der Transversalflußmaschine (6) von der Eingangswelle (E) der Getriebebaueinheit (7) vorgesehen sind.

6. Antriebssystem nach Anspruch 5, gekennzeichnet durch die folgenden Merkmale:
6.1 der Rotor (13) der Transversalflußmaschine (6) ist drehfest mit einer Hohlwelle (18) verbunden, welche die Eingangswelle (E) der Getriebebaueinheit (7) oder ein, mit dieser drehfest verbundenes Element in Umfangsrichtung und in axialer Richtung betrachtet, wenigstens über einen Teil der axialen Erstreckung der Eingangswelle (E) der Getriebebaueinheit (7) beziehungsweise eines mit der Eingangswelle (E) drehfest verbundenen Elementes erstreckt;
6.2 die Mittel (16) zur Entkopplung des Rotors von der Eingangswelle (E) der Getriebebaueinheit (7) umfassen wenigstens eine Kupplungseinrichtung (17), welche die Hohlwelle (18) mit der Eingangswelle (E) der Getriebebaueinheit (7) drehfest verbindet.

7. Antriebssystem nach einem der Ansprüche 1 bis 6, dadurch gekennzeichnet, daß die elektrische Antriebsmaschine (5) im Motor- und Generatorbetrieb betreibbar ist.

8. Antriebssystem (1) nach einem der Ansprüche 1 bis 7, dadurch gekennzeichnet, daß der Transversalflußmaschine eine externe oder interne im Fahrzeug angeordnete Energiespeichereinheit zugeordnet ist, welche mit der Transversalflußmaschine (6) wenigstens über einen Umrichter wenigstens verbunden ist.
